# EUROPÄISCHE PATENTSCHRIFT

(11) **EP 1 388 595 B1**
(45) Veröffentlichungstag und Bekanntmachung des Hinweises auf die Patenterteilung: **03.11.2010**
(21) Anmeldenummer: 02017382.9
(22) Anmeldetag: 02.08.2002
(51) Int. Cl.: C25B 1/18, C25B 9/04

(54) **Verfahren und Vorrichtung zur Bildung von Erdalkalicarbonat**
Process and apparatus for the formation of alkaline earth carbonates
Procédé et appareil pour la formation de carbonates alcalino-terreux

(43) Veröffentlichungstag der Anmeldung: 11.02.2004
(73) Patentinhaber: Grünbeck Wasseraufbereitung GmbH, D-89420 Höchstädt (DE)
(72) Erfinder: Fleischmann, Robert, 63846 Laufach (DE); Meinardus, Martin, 89231 Neu-Ulm (DE)
(74) Vertreter: Hofer, Dorothea

(56) Entgegenhaltungen:
- EP-A- 1 036 769
- WO-A-01/02626
- FR-A- 1 208 618
- US-A- 5 958 196
- US-B1- 6 391 184

## Beschreibung

Die Erfindung betrifft ein Verfahren zur Bildung von Erdalkalicarbonat in wässrigen Flüssigkeiten mit Hilfe einer mindestens eine Elektrode einschließenden, elektrische Energie bzw. elektrischen Strom liefernden Vorrichtung. Das Verfahren bzw. die verwendete Vorrichtung ist geeignet zur langzeitstabilen und gezielten Ausfällung von im Wasser schwerlöslichen Erdalkalicarbonaten, um einer Carbonatablagerung auf Wärmetauscherflächen und in Rohrleitungen vorzubeugen.

Die DE 195 02 588 A1 und die DE 100 01 911 A1 beschreiben auf elektrochemischen Prozessen beruhende Techniken zur Erniedrigung von Carbonatablagerungen, d.h. von Kalksteinbildungen, in Rohrleitungen und auf Wärmetauscherflächen jeglicher Art, indem mit Hilfe von elektrischen Strom bzw. Energie liefernde Elektroden, die mit dem zu behandelnden Wasser in Kontakt kommen, Einfluß ausgeübt wird auf das Gleichgewicht zwischen gelöstem Erdalkalihydrogencarbonat einerseits und Erdalkalicarbonat und Kohlendioxid andererseits.

Der Einsatz von beschichtetem Titan in elektrochemischen Vorrichtungen ist bekannt (Sandstede in: "Elektrochemische Stoffgewinnung - Grundlagen und Verfahrenstechnik", Monographie, Bd. 125 der DICHEMA, Frankfurt a. Main, 1992, S. 329, und Hemberg et al. in: "Elektrochemische Stoffgewinnung - Grundlagen und Verfahrenstechnik", Monographie, Bd. 125 der DECHEMA, Frankfurt a. Main 1992, S. 369). Die fortschreitende Oxidation im Ano-denbereich und die Versprödung aufgrund einer Reaktion mit Wasserstoff zu Hydrid in den Kathoden (s. die zitierten Artikel von Sandstede sowie Hemberg et al., und RÖMPPS Chemie-Lexikon, 9. Auflage, Georg Thieme Verlag, Stuttgart-New York, 1992, S. 4626 (Titan; Verwendung) und die dort zitierte Literatur) erfordern jedoch sogenannte Ventilelektroden, d.h. eine Beschichtung des Titans mit Edelmetallen oder Edelmetalloxiden (Baeckmann et al., Handbuch des Kathodischen Korrosionsschutzes, VCH Weinheim 1989, S. 204, und die dort zitierte Literatur) .

Das so beschichtete Titanmetall kommt z.B. in der Chlor-Alkali-Elektrolyse, im kathodischen Korrosionsschutz der Elektrodialyse und der Galvanotechnik (s. RÖMPPS Chemie-Lexikon, wie zitiert), aber auch zur elektrolytischen Behandlung von Wasser bzw. wässrigen Lösungen (DE 199 118 75 A1) zur Anwendung.

Adäquate Werkstoffe für die Stromzuführung an die Elektroden von elektrochemisch reaktiven Vorrichtungen, d.h. die Stromzu- bzw. -ableitung, sind Graphitstangen oder Graphitprofile bzw. faserverstärkte Kohlenstoffmaterialien. Eisenmetalle, bzw. -legierungen und selbst hochlegierte Stähle sind aufgrund der Stillstandskorrosion und Chloridanfälligkeit im sensiblen Trinkwasserbereich nicht einsetzbar. Edelmetallanwendungen scheitern an den Kosten.

Aufgabe der vorliegenden Erfindung ist es, ein Verfahren bzw. eine Verwendung einer Vorrichtung zur verbessertem Vorbeugung vor einer Kalksteinbildung an Grenzflächen fest/flüssig bereitzustellen.

Diese Aufgabe wird erfindungsgemäß gelöst durch ein Verfahren gemäß Anspruch 1 sowie eine Verwendung gemäß Anspruch 9. Bevorzugte Weiterbildungen sind in den Unteransprüchen angegeben .

Überraschenderweise wurde gefunden, daß, wenn die Stromzuführung bzw. die Stromverteilung an mindestens eine Elektrode, die in der Vorrichtung zur Beeinflussung des Reaktionsgleichgewichts zwischen wasserlöslichem Erdalkalihydrogencarbonat und in Wasser schwer löslichem Erdalkalicarbonat und Kohlendioxid zum Einsatz kommt, mit unbeschichtetem Titan erfolgt, ausgezeichnete Ergebnisse mit den nachfolgend beschriebenen Vorteilen erzielt werden. Stromzufuhrleitungen, die mindestens zum Teil, wenigstens in einem Teilabschnitt des Kontaktes mit der mit Strom bzw. Spannung beaufschlagbaren Elektrode, aus unbeschichtetem Titan und insbesondere aus unlegiertem und unbeschichtetem Reintitan gefertigt sind, sind erheblich stabiler als Stromzuführungen mit Graphitstangen, Graphitprofilen bzw. faserverstärkten Kohlenstoffmaterialien, und die elektrischen Eigenschaften verändern sich auch nach einem hohen Ladungsdurchgang nicht. Weder eine befürchtete Wasserstoffversprödung noch eine fortschreitende Oxidation stören die Betriebsweise der Reaktoren, so daß zu erwarten ist, daß eine Wasserbehandlungsanlage, in der die erfindungsgemäße Vorrichtung zum Einsatz kommt und die besonders zur Behandlung von Trinkwasser nützlich ist, bei minimierter Kontamination über eine lang andauernde Betriebszeit störungsfrei eingesetzt werden kann. Insbesondere kann der Übergangswiderstand zwischen der wasserstabilen Stromzuführung und der Elektrode derart minimiert werden, daß eine schädliche Temperaturerhöhung im Kontaktbereich von Stromzuführung und Elektrode sicher und langzeitstabil vermieden werden kann. Dadurch bleiben die Vorspannungen bei hohen Ladungsbelastungen über lange Zeit in einem günstigen Bereich, und der Abbrand des Elektrodenmaterials, welches vorzugsweise aus einem Kohlenstoffmaterial gebildet ist, wird auf ein Minimum beschränkt. Zusätzlich ist die Bildung von reaktivem Kohlendioxid aus einer Eigenoxidation im thermisch belasteten Kontaktbereich vermindert. Die Folgen sind größere Serviceintervalle und eine längere Lebensdauer der Stromzufuhrleitungs/Elektroden-Module der Vorrichtung und der zur Behandlung von Wasser, insbesondere Trinkwasser, eingesetzten Anlagen.

Die Bildung des Erdalkalicarbonats kann durch elektrochemische Ausfällung an bzw. - insbesondere wenn nachfolgend näher beschriebene strukturierte Elektroden verwendet werden - im Inneren der Kathode der Vorrichtung stattfinden.

Die Erfindung wird nachfolgend mit bevorzugten Ausführungsformen und unter Bezugnahme auf die beigefügten Zeichnungen näher erläutert.
- Fig. 1: zeigt schematisch eine Vorrichtung mit einer Elektrode und einer Vergleichs-Stromzuführung im Vertikalschnitt;
- Fig. 2: zeigt eine Ausführungsform einer erfindungsgemäßverwendeten Vorrichtung mit einer Elektrode und einer Stromzuführung im Vertikalschnitt; und
- Fig. 3: zeigt eine andere Ausführungsform einer erfindungsgemäßverwendeten Vorrichtung mit einer Elektrode und einer Stromzuführung im Querschnitt.

Die Elektrode, die über unbeschichtetes Titan und vorzugsweise über Reintitan mit Strom bzw. elektrischer Energie versorgt wird, weist eine strukturierte Gestalt auf. Solche strukturierten Elektroden besitzen Poren oder Hohlräume, durch die das zu behandelnde Wasser fließen kann. Die strukturierten, sogenannten dreidimensionalen Volumenelektroden sind vorzugsweise aus einem Kohlenstoffmaterial gebildet. Geeignete Kohlenstoffmaterialien für die Elektrode sind Kohle- oder Graphitteilchenschüttungen und vor allem, wegen der damit verbundenen besseren Effekte, Kohle- oder Graphitfilz, Papiere oder andere Textiltexturen aus Kohlenstoff- bzw. Graphitmaterial. Der Verbund zwischen dem Titanmaterial der Stromzuführung ohne Beschichtung und Vorbehandlung und den strukturierten, dreidimensionalen Volumenelektroden, insbesondere wenn letztere aus einem Kohlenstoffmaterial gebildet sind, trägt besonders zu einer mechanisch- und abbrandstabilen Betriebsweise der elektrochemischen Vorrichtung mit minimierter Versprödung und Oxidation bei.

Die Stromzufuhr- bzw. Ableitung ist wenigstens in einem Teilabschnitt des Kontakts mit der Elektrode, vorzugsweise im ganzen Bereich des Kontakts mit der Elektrode und weiter bevorzugt darüber hinaus - zumindest in dem mit dem zu behandelnden Wasser in Kontakt kommenden Teil der Stromleitung - aus unbeschichtetem und vorzugsweise unlegiertem Titan gebildet. Eine bevorzugte Ausgestaltung besteht darin, daß die Titan-Stromzuführung im Verbund mit der oben beschriebenen, strukturierten Elektrode als Stange, Draht oder angepaßtes Profilelement in die strukturierte Elektrode eingepreßt wird.

Der Verbund aus der Kombination Stromzuführung mit Titan und strukturierter Elektrode, insbesondere in Kombination mit den dreidimensionalen Volumenelektroden aus Kohlenstoffmaterialien, zeigte eine höchst leistungsfähige Verminderung der Kalksteinbildung an Rohrwänden und Wärmetauscherflächen jeglicher Art. Die Stromausbeute konnte erhöht werden, und eine für die Sicherheit der Gesamtanlage äußerst günstige Reduzierung der Spannung und/oder der Feldstärke konnte realisiert werden. Die Spannung kann folglich auf einen Wertebereich eingestellt werden, der unterhalb der Zersetzungsspannung des Wassers liegt, um die Gefährdung einer Knallgasreaktion zu vermeiden. Ferner kann die Feldstärke auf einen günstigen Bereich, geeigneterweise auf einen Wert von 10 V/cm oder darunter, vorzugsweise auf 5 V/cm oder darunter und insbesondere auf 3 V/cm oder darunter eingestellt werden. Die Feldlinienverteilung wird gleichmäßiger und folglich die Ausnützung der Elektrodenräume wirksamer mit entsprechend positiven Auswirkungen auf die Ladungsausbeute und die Lebensdauer der Gesamtanlage.

In einer weiter bevorzugten Ausgestaltung der Erfindung ist es möglich, mehrere Stromzuführungen pro Elektrode anzuordnen. Dadurch können auch größere Elektrodenflächen leistungsfähig und effizient mit elektrischem Strom versorgt werden.

Eine weitere vorteilhafte Weiterbildung der Erfindung besteht darin, daß die Stromzufuhr über einen Gleichstrom erfolgt. Dabei werden vorzugsweise Stromimpulse bis 1 Hz, weiter bevorzugt bis 0,1 Hz, und insbesondere im Bereich von 0,1 bis 10 mHz in das zu behandelnde Wasser eingebracht. In einer bevorzugten Weiterbildung finden im Laufe der Zeit Umpolungen statt, was zur gleichmäßigen Belastung der elektrochemischen Anlage führt. Hierzu sind vorzugsweise die Stromzuführungen aller in der elektrochemischen Anlage verwendeten Elektroden mindestens in einem Kontaktbereich mit den Elektroden aus dem unbeschichteten und vorzugsweise unlegierten Titan gefertigt.

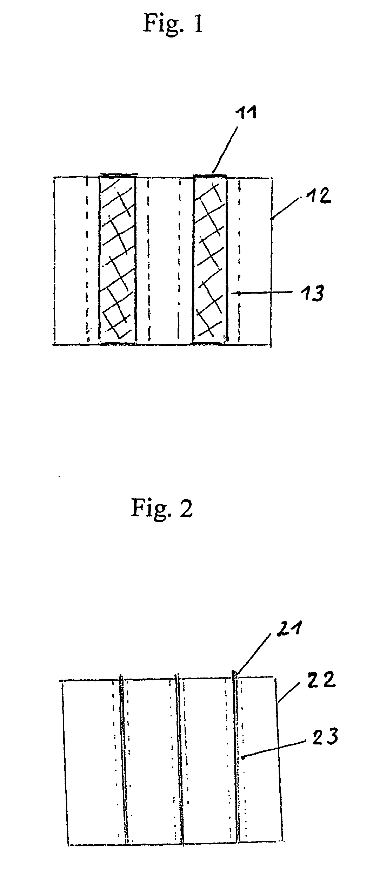

Die Fig. 1 zeigt schematisch im Vertikalschnitt ein Elektrodenteil einer Vorrichtung zur Ausführung elektrochemischer Reaktionen, wobei lediglich der Verbund zwischen einer Stromzuführung 11 mit einem strukturierten (porösen) Elektrodenmaterial 12 veranschaulicht ist. Zum Vergleich sind hier Stromzuführungen 11 aus Graphitstäben gebildet. Die Figur zeigt den Zustand vor der Verpressung des porösen Elektrodenmaterials 12. Zur Bereitstellung einer ausreichenden mechanischen Bruchfestigkeit war für die Graphit-Stromzufuhrleitung ein Mindestdurchmesser von mehr als 10 mm, etwa 15 mm, zweckmäßig. Für die Verpressung des strukturierten Elektrodenmaterials 12 war ein zusätzlicher Raumbedarf 13 auf Kosten der nutzbaren Elektrodenfläche erforderlich. Bei einer Elektrodenfläche von 0,4 m² erwiesen sich hier maximal zwei Stromzuführungen als sinnvoll.

In Fig. 2 ist demgegenüber schematisch im Vertikalschnitt eine erfindungsgemäße Vorrichtung gezeigt, wobei wiederum lediglich der Verbund zwischen Stromzuführung und Elektrode veranschaulicht ist. Im Gegensatz zum vorstehend beschriebenen Vergleich sind hier die Stromzuführungen 21 aus Reintitanstäben gebildet, welche im Verbund mit dem strukturierten, porösen Elektrodenmaterial 22 vorliegen. In Fig. 2 ist wiederum der Zustand vor der Verpressung des porösen Elektrodenmaterials gezeigt. Der Einsatz der mechanisch sehr stabilen Reintitanstäbe 21 ermöglicht hier das Ausbilden von schmalen Stabdurchmessern von 10 mm oder weniger oder vorzugsweise von 5 mm oder weniger. Der Raumbedarf für die Verpressung des porösen Elektrodenmaterials 22 ist geringer als beim Aufbau gemäß Fig. 1. Aus diesem Umstand sowie der Möglichkeit des Einsatzes schmaler Stromzuführstäbe ergeben sich die Vorteile, daß bei gegebener Elektrodenfläche eine höhere Anzahl von Stromzufuhrleitungen einsetzbar sind und darüber hinaus der zur Verpressung des Elektrodenmaterials vorzugebende Raumbedarf verringert werden kann im Vergleich zum in Fig. 1 gezeigten Aufbau. Daraus folgt eine höhere Stromausbeute und eine größere nutzbare Elektrodenfläche bei der erfindungsegemäßen Ausführungsform.

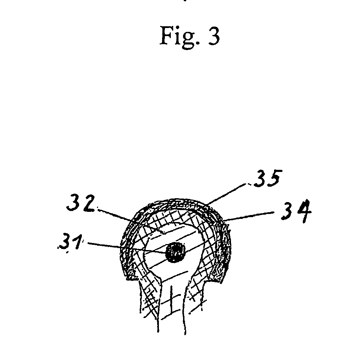

Fig. 3 zeigt eine weitere, bevorzugte Ausführungsform der erfindungsgemäßverwendeten Vorrichtung, wobei schematisch ein Querschnitt im Bereich des Verbundkontakts zwischen Elektrode und Stromzuführung herausgegriffen ist. Eine stabförmige Stromzuführung 31 wird im Verbundkontakt mit einer Elektrode 32 aus Reintitan von der Elektrode 32 umhüllt. Diese Struktur ist mit einer Stromleitungsführung 34 verpreßt. Zwischen der Elektrode 32 und der Stromleitungsführung 34 kann zweckmäßig ein Isolatormaterial 35, z.B. ein nicht-leitender Kunststoff oder ein Keramikmaterial, eingesetzt werden. Das Isolatormaterial 35 kann auch weggelassen werden.

Der in Fig. 3 gezeigte Aufbau erlaubt einen sehr guten und wirksamen Kontakt zwischen dem strukturierten Elektrodenmaterial und der Titan-Stromzuführung. Dank der Möglichkeit, Reintitanstäbe oder ähnliche Profilelemente schmal auszugestalten, können platzsparende und kostengünstige Ausführungen zur Stromzuführung und -verteilung angewandt werden.

Die Elektrode, speziell die Kathode der erfindungsgemäßverwendeten Vorrichtung ist nicht auf die in den Figuren lediglich beispielhaft dargestellten Formen beschränkt. Die Elektrode kann z.B. die Form einer Wicklung, eines Zellpakets, eines Rohrs oder dergleichen aufweisen.

Die vorliegende Erfindung wird nachfolgend anhand von Beispielen, die lediglich veranschaulichend, jedoch nicht einschränkend zu verstehen sind, weiter beschrieben:

### Beispiel 1

### Stabilität der Titanzuführungen

Reintitanstäbe mit einer Länge von 600 mm und einem Durchmesser von 4 mm wurden in einem Elektrodenzellpaket im Zeitraffertest mit über 5000 Ah beaufschlagt. Dies entspricht beim Betrieb in einer Trinkwasserbehandlungsanlage für ein Gebäude einer Lebensdauer von weit über 5 Jahren.

Die elektrischen Eigenschaften der Anlage veränderten sich auch nach dem Ladungsdurchgang von 5000 Ah nicht, und es waren keine Degradationen feststellbar.

### Beispiel 2

### Vergleich von Stromzuführungen

Strukturierte Kohlenstoffelektroden wurden gemäß den Ausführungen nach Fig. 1 bzw. Fig. 2 mit unterschiedlichen stabförmigen Stromzuführungen ausgerüstet und in eine Vorrichtung eingesetzt, mit der elektrische Energie in das zu behandelnde Wasser eingebracht wurde.

Bei dem in Fig. 1 gezeigten Vergleichsaufbau waren zwei Graphit-Stromzufuhrleitungen eingesetzt, die zur Bereitstellung einer ausreichenden mechanischen Durchlässigkeit einen Durchmesser von 15 mm besaßen.

Im erfindungsgemäßen Aufbau nach Fig. 2 konnten drei Reintitanstäbe von 4 mm Durchmesser zu etwa gleichen Kosten wie bei der Anwendung der Graphitzuführungen nach Fig. 1 eingesetzt werden.

Bei der Ausführung mit Reintitan konnte eine deutlich höhere Stromausbeute und eine deutlich längere Lebensdauer der Elektroden festgestellt werden. Der Verlust an Elektrodenfläche aufgrund der Verpressung des strukturierten Elektrodenmaterials für den Kontakt mit den Stromzufuhrleitungen war ferner deutlich geringer als bei der Verwendung von Graphitstäben.

## Patentansprüche

1. Verfahren zur Bildung von Erdalkalicarbonat in wässrigen Flüssigkeiten mit Hilfe einer elektrischen Strom liefernden Vorrichtung, wobei die Stromzuführung (21; 31) an mindestens eine Elektrode (22; 32) der Vorrichtung wenigstens in einem Teilabschnitt des Kontakts zwischen Stromzuführung und Elektrode mit unbeschichtetem Titan erfolgt,**dadurch gekennzeichnet, daß** als Elektrode (22; 32) eine strukturierte, Poren aufweisende Elektrode verwendet wird und daß in einem Kontaktbereich zwischen Elektrode (22; 32) und Stromzuführung (21; 31) ein Verbund vorliegt.

2. Verfahren gemäß Anspruch 1, **dadurch gekennzeichnet, daß** als unbeschichtetes Titan unlegiertes Reintitan verwendet wird.

3. Verfahren gemäß Anspruch 1 oder 2, **dadurch gekennzeichnet, daß** als Elektrode (22; 32) eine strukturierte Elektrode aus einem Kohlenstoffmaterial mit Filz-, Papier- oder Textiltextur verwendet wird.

4. Verfahren gemäß einem der vorangehenden Ansprüche, **dadurch gekennzeichnet, daß** der Verbund zwischen Elektrode (22; 32) und Stromzuführung (21; 31) **dadurch** erhalten wurde, daß das unbeschichtete Titan als Stange, Draht oder angepaßtes Profilelement in die Elektrode eingepreßt wurde.

5. Verfahren gemäß einem der vorangehenden Ansprüche, **dadurch gekennzeichnet, daß** in einer Elektrode (22; 32) mehrere Stromzuführungen (21; 31) angeordnet werden.

6. Verfahren gemäß einem der vorangehenden Ansprüche, **dadurch gekennzeichnet, daß** nach bestimmten Zeitabständen Umpolungen stattfinden und daß die Stromzuführungen aller Elektroden mindestens im Kontaktbereich mit den Elektroden aus unbeschichtetem Titan gefertigt sind.

7. Verfahren gemäß einem der vorangehenden Ansprüche, **dadurch gekennzeichnet, daß** die Spannung des zugeführten Stroms so eingestellt wird, daß diese unterhalb der Zersetzungsspannung von Wasser liegt.

8. Verfahren gemäß einem der vorangehenden Ansprüche, **dadurch gekennzeichnet, daß** ein elektrisches Feld von höchstens 3 V/cm angelegt wird.

9. Verwendung einer Vorrichtung zum Vorbeugen von Carbonatablagerungen in Rohrleitungen und auf Wärmetauscherflächen, wobei die Vorrichtung zur Bildung von Erdalkalicarbonat in wässrigen Flüssigkeiten unter Anwendung von elektrischer Energie verwendet wird, wobei mindestens eine Elektrode (22; 32) der Vorrichtung mit einer Stromzuführung (21; 31) versehen ist, welche wenigstens in einem Teilabschnitt des Kontakts mit der Elektrode aus unbeschichtetem Titan gefertigt ist,
wobei die Elektrode (22; 32) eine strukturierte, Poren aufweisende Elektrode ist und die Titan-Stromzuführung (21; 31) in einem Kontaktbereich zwischen Elektrode (22; 32) und Stromzuführung (21; 31) im Verbund mit der strukturierten Elektrode als Stange, Draht oder angepasstes Profilelement in die strukturierte Elektrode eingepresst ist.

10. Verwendung gemäß Anspruch 9, **dadurch gekennzeichnet, daß** das unbeschichtete Titan unlegiertes Reintitan ist.

11. Verwendung gemäß Anspruch 9 oder 10, **dadurch gekennzeichnet, daß** die Elektrode (22; 32) aus einem Kohlenstoffmaterial gebildet ist, welches eine Filz-, eine Papier- oder eine Textiltextur aufweist.

12. Verwendung gemäß einem der Ansprüche 9 bis 11, **dadurch gekennzeichnet, daß** bei allen Elektroden der Vorrichtung die Stromzuführungen mindestens im Kontaktbereich mit den Elektroden aus unbeschichtetem Titan gefertigt sind.

13. Verwendung gemäß einem der Ansprüche 9 bis 12, **dadurch gekennzeichnet, daß** der Durchmesser der längsgerichteten Stromzuführung (21; 31) 10 mm oder weniger beträgt.

## Claims

1. A process for the formation of alkaline earth carbonate in aqueous liquids by means of a device providing electrical power, wherein the power supply (21; 31) takes place at at least one electrode (22; 32) of the device in at least one portion of the contact between power supply and electrode with uncoated titanium, **characterized in that** a structured electrode having pores is used as electrode (22; 32), and **in that** a composite is present in a contact region between electrode (22; 32) and power supply (21; 31).

2. The process according to claim 1, **characterized in that** unalloyed pure titanium is used as uncoated titanium.

3. The process according to claim 1 or 2, **characterized in that** a structured electrode of a carbon material having felt, paper or textile texture is used as electrode (22, 32).

4. The process according to any one of the preceding claims, **characterized in that** the composite between electrode (22; 32) and power supply (21; 31) was obtained **in that** the uncoated titanium was pressed into the electrode as rod, wire or fitted profile element.

5. The process according to any one of the preceding claims, **characterized in that** multiple power supplies (21; 31) are arranged in an electrode (22; 32).

6. The process according to any one of the preceding claims, **characterized in that** after certain intervals, pole reversals take place, and **in that** the power supplies of all electrodes are made of uncoated titanium at least in the contact region with the electrodes.

7. The process according to any one of the preceding claims, **characterized in that** the voltage of the supplied power is set such that it is below the decomposition voltage of water.

8. The process according to any one of the preceding claims, **characterized in that** an electric field is applied of at most 3 V/cm.

9. A use of a device to prevent carbonate deposits in pipes and on heat exchanger surfaces, wherein the device is used for the formation of alkaline earth carbonate in aqueous liquids by applying electric energy, wherein at least one electrode (22; 32) of the device is provided with a power supply (21; 31) which is made of uncoated titanium in at least one portion of the contact with the electrode, wherein the electrode (22; 32) is a structured electrode having pores and the titanium power supply (21; 31) is pressed into the structured electrode as rod, wire or fitted profile element in a contact region between electrode (22; 32) and power supply (21; 31) in a composite with the structured electrode.

10. The use according to claim 9, **characterized in that** the uncoated titanium is unalloyed pure titanium.

11. The use according to claim 9 or 10, **characterized in that** the electrode (22; 32) is formed of a carbon material which has a felt, a paper or a textile texture.

12. The use according to any one of the claims 9 to 11, **characterized in that** for all electrodes of the device the power supplies are made of uncoated titanium in at least the contact region with the electrode.

13. The use according to any one of the claims 9 to 12, **characterized in that** the diameter of the longitudinally directed power supply (21; 31) is 10 mm or less.

## Revendications

1. Procédé pour la formation de carbonates alcalino-terreux dans des liquides aqueux au moyen d'un dispositif fournissant un courant électrique, sachant que l'alimentation de courant (21 ; 31) à au moins une électrode (22 ; 32) du dispositif est effectuée avec du titane non revêtu au moins dans une zone partielle du contact entre le câble d'alimentation de courant et l'électrode, **caractérisé en ce que** l'électrode (22 ; 32) utilisée est une électrode structurée, munie de pores et **en ce qu'**il existe une liaison dans la zone de contact entre l'électrode (22 ; 32) et l'alimentation de courant (21 ; 31).

2. Procédé selon la revendication 1, **caractérisé en ce que** le titane non revêtu utilisé est du titane pur non allié.

3. Procédé selon la revendication 1 ou 2, **caractérisé en ce que** l'électrode (22 ; 32) utilisée est une électrode structurée réalisée dans un matériau de carbone avec une texture de feutre, de papier ou de textile.

4. Procédé selon l'une quelconque des revendications précédentes, **caractérisé en ce que** la liaison entre l'électrode (22 ; 32) et l'alimentation de courant (21 ; 31) est obtenue par le fait que le titane non revêtu, sous forme de tige, fil ou élément profilé ajusté, est pressé à l'intérieur de l'électrode.

5. Procédé selon l'une quelconque des revendications précédentes, **caractérisé en ce que** plusieurs alimentations de courant (21 ; 31) sont disposés dans une électrode (22 ; 32).

6. Procédé selon l'une quelconque des revendications précédentes, **caractérisé en ce que** des inversions de polarité se produisent après des intervalles de temps déterminés, et **en ce que** les alimentations de courant de toutes les électrodes sont réalisées en titane non revêtu, au moins dans la zone de contact avec les électrodes.

7. Procédé selon l'une quelconque des revendications précédentes, **caractérisé en ce que** la tension du courant acheminé est réglée de telle sorte que celle-ci est inférieure à la tension de décomposition de l'eau.

8. Procédé selon l'une quelconque des revendications précédentes, **caractérisé en ce qu'**il est appliqué un champ électrique de 3 V/cm maximum.

9. Utilisation d'un dispositif pour parer à des dépôts de carbonates dans des conduites tubulaires et sur les surfaces d'échangeurs thermiques, ledit dispositif étant utilisé pour la formation de carbonates alcalino-terreux dans des liquides aqueux moyennant l'utilisation d'une énergie électrique, au moins une électrode (22 ; 32) du dispositif étant munie d'une alimentation de courant (21 ; 31), qui est réalisée en titane non revêtu au moins dans une zone partielle du contact avec l'électrode, sachant que l'électrode (22 ; 32) est une électrode structurée, munie de pores et l'alimentation de courant (21 ; 31) en titane sous forme de tige, fil ou élément profilé ajusté est pressée à l'intérieur de l'électrode dans une zone de contact entre l'électrode (22 ; 32) et l'alimentation de courant (21 ; 31) en liaison avec l'électrode structurée.

10. Utilisation selon la revendication 9, **caractérisée en ce que** le titane non revêtu utilisé est du titane pur non allié.

11. Utilisation selon la revendication 9 ou 10, **caractérisée en ce que** l'électrode (22 ; 32) est réalisée dans un matériau de carbone qui présente une texture de feutre, une texture de papier ou une texture de textile.

12. Utilisation selon l'une quelconque des revendications 9 à 11, **caractérisée en ce que** dans toutes les électrodes du dispositif, les alimentations de courant sont réalisées en titane non revêtu, au moins dans la zone de contact avec les électrodes.

13. Utilisation selon l'une quelconque des revendications 9 à 12, **caractérisée en ce que** le diamètre de l'alimentation de courant (21 ; 31) orienté dans le sens longitudinal est égal à 10 mm ou moins.
